# EUROPEAN PATENT SPECIFICATION

(11) **EP 1 901 417 B1**
(45) Date of publication and mention of the grant of the patent: **13.04.2011**
(21) Application number: 06291451.0
(22) Date of filing: 13.09.2006
(51) Int. Cl.: H02K 16/00, E21B 4/04, F04D 13/10

(54) **Electric motor**
Elektrischer Motor
Moteur électrique

(43) Date of publication of application: 19.03.2008
(73) Proprietor: Services Pétroliers Schlumberger, 75007 Paris (FR); Schlumberger Technology B.V., 2514 JG The Hague (NL); Schlumberger Holdings Limited, Road Town, Tortola (VG); PRAD Research and Development N.V., Willemstad, Curacao (AN)
(72) Inventor: Schmitt, Benoit, 91300 Massy (FR)
(74) Representative: Vandermolen, Mathieu

(56) References cited:
- WO-A2-2004/114498
- US-A- 4 227 584
- US-A1- 2003 116 323

## Description

### Technical field

This invention relates to electric motors and specifically to their use in downhole tools such as are used in exploration and production of hydrocarbons.

### Background art

Electric motors are widely used in downhole equipment in the hydrocarbon exploration and production industries. Such motors can be powered via cable from the surface, downhole generators powered by fluid flow, or batteries. A significant limitation concerning the use of electric motors is the limited diameter (OD) available for them to be fitted into downhole equipment, and consequently their limited volume. Current electric motor technology therefore provides a limit to the maximum power that can be provided within this limited volume. There are also thermal limitations for electric motors, the cooling capability mostly being proportional to the external surface of the stator (convection with the well fluid is often the predominant mechanism for heat transfer). Consequently for a given rating of motor, its possible power loss is proportional to its length; at a first order (constant efficiency), this means that the possible mechanical power of such an electric motor is also proportional to its length.

For conventional electric motors used in the oilfield industries (the rotor being internal and the stator being wound internally), winding becomes very challenging when the length of the stator exceeds three times its OD. This means that most such long motors are hand-built as proper production tooling often does not exist to produce such designs. This can result in difficulty in ensuring a proper manufacturing process and for proper inspection of the inner winding for a long stator. US 6288470 (CAMCO INT) 11.09.2001 discloses a modular stator for use in an electric motor. The modular stator includes a plurality of stator sections and a plurality of connectors. The plurality of stator sections have conductors extending therethrough with exposed terminal ends. The connectors have corresponding conductive elements with receptacles for receiving the terminal ends. Thus, a given stator may be assembled to a variety of desired lengths by connecting the appropriate number of modular components. US 6388353 (CAMCO INT) 14.05.2002 discloses a permanent magnet AC synchronous motor having an elongated housing, of the type used in progressive cavity pumping applications. Within the stator, a multi-section rotor is rotatably mounted. The rotor includes a plurality of rotor sections that are angularly offset from each other. The rotor sections are mounted on a drive shaft, and the sum of the offsets is generally comparable to the angular displacement undergone by the drive shaft under a normal operating load.

US 2009/0116323 A1 discloses a motor having the features of the preamble of claim 1.

An objective of this invention is to provide an electric motor with increased power rating for a given OD. This objective is achieved by providing a motor with multiple, independently controllable stators that are coupled together

### Disclosure of the invention

A first aspect of the invention comprises an electric motor for use in a borehole tool, comprising
- a housing;
- a plurality of stator windings spaced along the inside of the housing;
- an output shaft located in the housing;
- a plurality of rotors disposed on the output shaft and aligned with the stators so as to define a plurality of motor sub-units; and
- separate power supplies and control systems for each motor sub-unit; wherein each motor sub-unit is separately controllable by means of its associated power supply and control system.

The output shaft comprises a plurality of sub-shafts connected end to end. In this case, each rotor can be disposed on an associated sub-shaft. The sub-shafts are connected by means of articulated connections, and the housing can be articulated in the region of the connections.

The sub-shafts are connected by non-homocinetic couplings such that the instantaneous angle between each rotor and its associated stator is independent of those of the neighbouring motor sub-units to which it is connected. The control systems are typically arranged to drive the phases of each motor sub-units independently.

Another aspect of the invention provides borehole tool comprising an electric motor according to the invention.

### Brief description of the drawings

Figure 1 shows a schematic view of part of a motor section of a borehole tool according to an example which is not an embodiment of the invention but which is useful for understanding the invention; and
Figure 2 shows a schematic view of an embodiment of the invention.

### Mode(s) for carrying out the invention

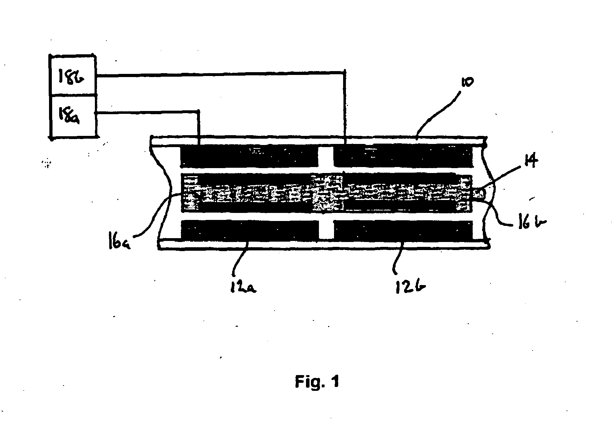

Figure 1 shows a schematic view of part of a motor section of a borehole tool such as a drilling tool for drilling lateral boreholes. The motor comprises a cylindrical housing 10 of normal size for placement in a borehole. Stator windings 12a, 12b are provided inside the housing 10, spaced apart in the axial direction. An output shaft 14 is mounted for rotation inside the housing so as to be coaxial with the stators 12a, 12b. Rotors 16a, 16b are mounted on the output shaft 14 and positioned to align with the stator windings 12a, 12b so as to define motor sub-units. Each sub-unit is connected to a respective power supply and control system 18a, 18b. One particularly preferred form of motor sub-unit is formed from stators and rotors of the type used in conventional motors for borehole tools. Such motors are commonly synchronous brushless motors which are preferred for their great power density and high reliability, but other forms of motor such as asynchronous AC motors and DC motors can also be used.

By 'stacking' the motor sub-units, the torque from the stacked motor is multiplied by the number of sub-units stacked together, compared to a standard electrical motor composed of one rotor and one stator (i.e. one sub-unit). Thus an improved torque performance can be obtained for a given tool OD using essentially standard motor components.

Because the rotors 16a, 16b are mounted on a single shaft, the instantaneous speed of each rotor is the same, and the instantaneous angle between the rotor and its associated stator is identical on every motor sub-unit. Therefore, the entire motor assembly can be treated as a single motor and the control systems 18a, 18b operated so that the phase of each motor is driven together.

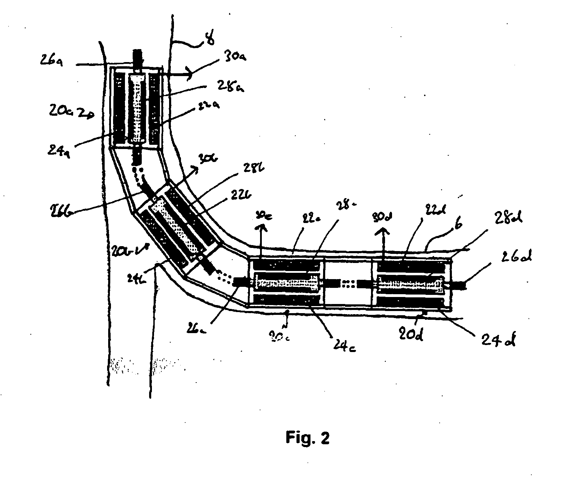

Proper mounting of the rotor in the stack of stators is important. For larger multiples of sub-units, manufacturing of the rotors on the shaft can become more complex in order to achieve the necessary clearance to be fitted into a stack of stators. Therefore, multiple motor sub-units are coupled together, rather than using a single rotor. Figure 2 shows a schematic view of this approach used to power a drilling tool that is used to drill a lateral borehole 6 being drilled from a main borehole 8.

In Figure 2, each motor sub-unit 20a-d comprises a housing 22a-d having a stator winding 24a-d disposed therein and a shaft 26a-d on which is mounted a rotor 28a-d. Each sub unit 20a-d is connected to its own power supply and control system 30a-d.

Articulated joints are used to connect the shafts 26 of adjacent motor sub-units 20 and to transmit torque, articulated housings being provided around the joints.

The shaft 26d of the final motor sub-unit 20d is connected to a drilling tool (not shown).

There are two possibilities for the articulated joints: homocinetic couplings which do not belong to the invention or non-homocinetic couplings according to the invention. In homocinetic couplings (e.g. two universal joints) the tool behaves essentially in the same way as the embodiment of Figure 1 described above and can be controlled in a likewise manner. In non-homocinetic couplings (e.g. flexible joints), the instantaneous angle of the rotor and its stator is not considered as identical for every motor sub-unit 20. In this case, each motor sub-unit 20a-d is controlled independently to obtain optimal efficiency for the entire assembly. One such approach is to fix a target speed for the output shaft of the assembly (i.e. shaft 26d) and to provide equal current to each motor sub-unit 20a-d of the assembly so that each provides its nominal power, and the assembly will be used at its optimal efficiency.

As the motor phases are driven separately in this scenario, this option provides built-in redundancy for the system. If a motor sub-unit fails, the motor failure will be detected by its control system and this single motor sub-unit can be disconnected from its drive electronics, leaving the rest of the assembly working on its own.

The large number of stators provides the opportunity to recombine stator windings in a homocinetic system in a large variety of configuration (Star vs. Delta, Series vs. Parallel) and consequently modify the characteristics of the assembled stacked motor as a mechanical gearbox would do. This 'electrical' gearbox does not require any mechanical parts. The gearbox ratio can be modified electrically downhole by rearranging the windings in a different pattern.

The control system can be arranged to provide active or passive load sharing by means of open or closed loop control.

Other changes can be made while staying within the scope of the claims.

## Claims

1. An electric motor for use in a borehole tool, comprising
- a housing (22a-d);
- a plurality of stator windings (24a-d) spaced along the inside of the housing (22a-d);
- an output shaft located in the housing and comprising a plurality of sub-shafts (26a-d) connected end to end;
- a plurality of rotors (28a-d) disposed on the output shaft and aligned with the stators so as to define a plurality of motor sub-units (20a-d);
- separate power supplies and control systems (30a-d) for each motor sub-unit (20a-d); wherein each motor sub-unit (20a-d) is separately controllable by means of its associated power supply and control system (30a-d); and
**characterised in that** the plurality of sub-shafts (26a-d) are connected by non-homocinetic couplings such that the instantaneous angle between each rotor (28a-d) and its associated stator is independent of those of the neighbouring motor sub-units (20a-d) to which it is connected.

2. An electric motor as claimed in claim 1, wherein each rotor (28a-d) is disposed on an associated sub-shaft (26a-d).

3. An electric motor as claimed in claim 1, wherein the housing is articulated in the region of the connections.

4. An electric motor as claimed in claim 1, wherein the control systems are arranged to drive the phases of each motor sub-units independently.

5. A borehole tool comprising an electric motor as claimed in any preceding claim.

## Patentansprüche

1. Elektrischer Motor zur Verwendung in einem Bohrlochwerkzeug, umfassend
- ein Gehäuse (22a-d);
- mehrere längs des Inneren des Gehäuses (22a-d) beabstandete Statorwicklungen (24a-d),
- eine in dem Gehäuse angeordnete Abtriebswelle, die mehrere Ende an Ende verbundene Unterwellen (26a-d) umfasst;
- mehrere an der Abtriebswelle angeordnete und mit den Statoren so ausgerichtete Rotoren (28a-d), dass mehrere Motor-Untereinheiten (20a-d) definiert sind;
- getrennte Energieversorgungen und Steuerungssysteme (30a-d) für jede Motor-Untereinheit (20a-d);
wobei jede Motor-Untereinheit (20a-d) getrennt steuerbar ist durch ihre zugeordnete Energieversorgung und Steuerungssystem (30a-d), und **dadurch gekennzeichnet, dass** die mehreren Unterwellen (26a-d) durch nicht homokinetische Kupplungen verbunden sind, so dass der momentane Winkel zwischen jedem Rotor (28a-d) und seinem zugeordneten Stator unabhängig von denen von den benachbarten Motor-Untereinheiten (20a-d) ist, mit denen er verbunden ist.

2. Elektrischer Motor nach Anspruch 1, wobei jeder Rotor (28a-d) an einer zugeordneten Unterwelle (26a-d) angeordnet ist.

3. Elektrischer Motor nach Anspruch 1, wobei das Gehäuse im Bereich der Verbindungen angelenkt ist.

4. Elektrischer Motor nach Anspruch 1, wobei die Steuerungssysteme angeordnet sind, um die Phasen von jeder Motor-Untereinheit unabhängig anzusteuern.

5. Bohrlochwerkzeug, umfassend einen elektrischen Motor nach einem der vorhergehenden Ansprüche.

## Revendications

1. Moteur électrique pour une utilisation dans un outil de forage, comportant :
- un carter (22a à 22d),
- une pluralité d'enroulements de stator (24a à 24d) espacés le long de l'intérieur du carter (22a à 22d),
- un arbre de sortie positionné dans le carter et comportant une pluralité d'arbres secondaires (26a à 26d) raccordés bout à bout,
- une pluralité de rotors (28a à 28d) disposés sur l'arbre de sortie et alignés avec les stators de manière à définir une pluralité de sous-unités de moteur (20a à 20d),
- des alimentations en courant et des systèmes de commande (30a à 30d) séparés pour chaque sous-unité de moteur (20a à 20d),
dans lequel chaque sous-unité de moteur (20a à 20d) peut être commandée séparément au moyen de son alimentation en courant et de son système de commande (30a à 30d) associés, et
**caractérisé en ce que** la pluralité d'arbres secondaires (26a à 26d) est raccordée par des accouplements non homocinétiques de telle sorte que l'angle instantané entre chaque rotor (28a à 28d) et son stator associé est indépendant de ceux des sous-unités de moteur (20a à 20d) voisines auxquelles il est raccordé.

2. Moteur électrique tel que revendiqué dans la revendication 1, dans lequel chaque rotor (28a à 28d) est disposé sur un arbre secondaire (26a à 26d) associé.

3. Moteur électrique tel que revendiqué dans la revendication 1, dans lequel le carter est articulé dans la zone des raccordements.

4. Moteur électrique tel que revendiqué dans la revendication 1, dans lequel les systèmes de commande sont conçus pour entraîner les phases de chaque sous-unité de moteur de manière indépendante.

5. Outil de forage comportant un moteur électrique tel que revendiqué dans l'une quelconque des revendications précédentes.
